# EUROPÄISCHE PATENTSCHRIFT

(11) **EP 2 428 647 B1**
(45) Veröffentlichungstag und Bekanntmachung des Hinweises auf die Patenterteilung: **11.07.2018**
(21) Anmeldenummer: 11179039.0
(22) Anmeldetag: 26.08.2011
(51) Int. Cl.: F01D 9/02, F02C 7/24, F23R 3/00

(54) **Übergangsbereich für eine Brennkammer einer Gasturbine**
Transitional Region for a Combustion Chamber of a Gas Turbine
Zone de transition pour une chambre de combustion d'une turbine à gaz

(30) Priorität: 08.09.2010 EP 10175744
(43) Veröffentlichungstag der Anmeldung: 14.03.2012
(73) Patentinhaber: Ansaldo Energia IP UK Limited, London W1G 9DQ (GB)
(72) Erfinder: Schnieder, Martin, 5408 Ennetbaden (CH); Krückels, Jörg, 5413 Birmenstorf (CH); Rüdel, Uwe, 5406 Baden-Rütihof (CH); Appel, Christoph, 5222 Umiken (CH); Benz, Urs, 5073 Gipf-Oberfrick (CH)
(74) Vertreter: Bernotti, Andrea

(56) Entgegenhaltungen:
- EP-A1- 1 270 874
- EP-A1- 1 731 715
- EP-A1- 1 767 835
- EP-A1- 2 206 885
- EP-A2- 1 391 582
- EP-B1- 2 179 143

## Beschreibung

### TECHNISCHES GEBIET

Die vorliegende Erfindung betrifft eine Gasturbine, insbesondere eine besondere Ausgestaltung des Übergangsbereichs zwischen einer Brennkammer und einer Turbine bei einer Gasturbine.

### STAND DER TECHNIK

Gasturbinen können mit einer einzigen Brennkammer ausgestaltet sein, sie können aber auch eine so genannte sequenzielle Verbrennung aufweisen. Bei Letzterer wird in einer ersten Brennkammer Brennstoff verbrannt und die Verbrennungsluft anschließend über eine erste Turbine, eine Hochdruckturbine, entspannt. Hinter der Hochdruckturbine durchströmen die immer noch heissen Verbrennungsgase eine Sekundärbrennkammer, in welcher erneut Brennstoff zugeführt und typischerweise unter Selbstzündung verbrannt wird. Hinter dieser Sekundärbrennkammer ist eine Niederdruckturbine angeordnet, durch welche die Verbrennungsgase entspannt werden, gegebenenfalls gefolgt durch ein Wärmerückgewinnungssystem mit Dampferzeugung.

Der Übergang von Brennkammer zu Turbine ist dabei ein kritischer Bereich, weil in diesem besonders komplexe Temperatur- und Druckverhältnisse vorliegen. Typischerweise verfügt die Brennkammer, die beispielsweise als Ringbrennkammer ausgebildet ist, über eine gewissermassen schalenförmige äußere Begrenzung, eine äussere Wandung, welche aus einem hitzebeständigen Material besteht respektive entsprechend beschichtet ist, und welche normalerweise aus einzelnen Segmenten aufgebaut ist. Auf der gegenüberliegenden, näher bei der Achse liegenden Innenseite gibt es eine entsprechend ausgebildete innere Begrenzung, eine innere Wandung aus entsprechenden Materialien.

Die Turbine ihrerseits verfügt über eine Anzahl von alternierend angeordneten Reihen von Leitschaufeln und Laufschaufeln. Die erste unmittelbar hinter der Brennkammer angeordnete Schaufelreihe ist typischerweise eine Leitschaufelreihe mit erheblicher Verdrehung der Schaufeln bezüglich der Hauptachsenrichtung. Die Leitschaufeln sind dabei typischerweise als Segment-Module ausgebildet, bei welchen jede Leitschaufel auf der Innenseite eine innere Plattform und auf der Außenseite eine äußere Plattform aufweist, und diese Plattformen anschließend mit deren Innenfläche auch den Strömungskanal der Verbrennungsluft radial innen respektive radial außen begrenzen. Entsprechend gibt es auf der radial inneren Seite des ringförmigen Strömungskanals einen Spalt zwischen dem inneren Brennkammerhitzeschild (Wandungssegment der Brennkammer) und der inneren Plattform der ersten Leitschaufelreihe, und auf der radial äußeren Seite einen Spalt zwischen dem äußeren Brennkammerhitzeschild (Wandungssegment der Brennkammer) und der äußeren Plattform der ersten Leitschaufelreihe.

Aus der US 2009/0293488 ist bekannt, dass es möglich ist, diesen Übergangsbereich im wesentlichen durch ein sehr geringes Spaltmaß zu verschließen und zusätzlich spezifische Strukturen vorzusehen, welche in diesem Bereich eine optimale Kühlung der Wandungsbereiche sicherstellen. Problematisch an diesem Ansatz ist aber, dass durch das entsprechend geringe Spaltmaß auch das erforderliche Spiel zwischen dem Brennkammermodul und der Turbine nicht ohne weiteres gewährleistet ist.

Aufgrund der unterschiedlichen mechanischen und thermischen Belastungen der Bauteile Brennkammer und Turbine muss dieser Spalt aber eine gewisse Breite aufweisen und kann nicht ohne weiteres geschlossen oder vollständig überbrückt werden.

Tatsächlich ist die thermische Ausdehnung der verschiedenen in dieser Region aneinander grenzenden Komponenten (Turbine, Brennkammer) äußerst unterschiedlich und aufgrund der Komponentengröße auch absolut gesehen gross. An den Schnittstellen gibt es entsprechend große Spalte, welche über den gesamten transienten Verlauf (beispielsweise hot restart) ausreichende Spaltweiten aufweisen müssen. Als Konsequenz ist und muss die Spaltweite z.B. am Grundlastpunkt größer sein als dies für den Fahrzustand notwendig ist. Entsprechend lässt sich die Problematik durch eine Reduktion der Spaltweite nicht ohne weiteres lösen.

Des weiteren gibt es Unterschiede in den Komponenten und deren Beeinflussung durch die Strömungsprozesse. Namentlich gibt es in der Brennkammer nur kleine Druckunterschiede, während es im Bereich der Turbine große Druckunterschiede durch die Schaufeln gibt, welche das Druckfeld erzeugen. Das Druckfeld wirkt auf die Spalte. Die heissgastragenden Teile außerhalb des Strömungspfades müssen vor Heissgasbeaufschlagung geschützt werden. Druckspitzen des Druckfeldes bestimmen den Druck der in den angrenzenden Kavitäten zur Verfügung stehen muss. Leckage und höhere RTDF (radial temperature distribution function)/Emissionen sind die Folge. Die Spülung der Kavitäten wird konkret durch die auftretenden Druckspitzen bestimmt, und nicht durch den Mitteldruck.

Problematisch an diesem Spalt, der eine radial vom Heissgaskanal wegweisenden in weitere Konstruktionsbauteile des Gehäuses sich erstreckende Kavität bildet, ist also auch die Tatsache, dass er zudem insbesondere im Bereich jeweils einer Leitschaufel komplexen Strömungsbedingungen ausgesetzt ist. An der Anströmkante der Leitschaufeln bildet sich namentlich eine so genannte Bugwelle, die dazu führt, dass heiße Verbrennungsluft im Wandbereich unter Druck in diese Kavität hinein gepresst wird und entsprechend tief in diese eindringt. Dies kann zu Problemen im Zusammenhang mit einer Überhitzung aber auch mit Oxidation der entsprechenden Oberflächen Anlass geben.

Zudem treten die Biegemomentbelastungen an den Schaufeln an den Übergängen zwischen Plattform und Profil auf. Diese Biegemomente in Kombination mit den thermischen Spannungen beschränken die Größe der Plattformen und daher die Distanz, in welcher die Spalte von den Profilstaupunkten entfernt platziert werden können. Mit anderen Worten sind die Plattformüberhänge beschränkt.

Aus der EP 1 270 874 ist eine Gasturbine mit einer Brennkammer, einer Turbine und einem Überleitkanal bekannt, der den Ausgang der Brennkammer mit einem im Querschnitt kreisringförmigen Gaskanal der Turbine verbindet.

### DARSTELLUNG DER ERFINDUNG

Die vorliegende Erfindung soll die eingangs erläuterten Nachteile im Zusammenhang mit dem genannten Spalt gerade stromaufwärts vor der ersten Leitschaufelreihe, das heißt beim Übergang von der Brennkammer zur ersten Leitschaufelreihe lösen. Spezifisch geht es dabei um die Verbesserung einer Gasturbine mit einer Brennkammer und einer im wesentlichen unmittelbar stromab davon angeordneten ersten Leitschaufelreihe wobei die radial aussenseitige und/oder radial innenseitige Begrenzung der Brennkammer durch wenigstens ein äußeres respektive inneres Hitzeschild (welches gewissermassen die Innenwand der Brennkammer bildet und typischerweise in Form einer oder mehrerer Platten mit einer thermischen Schutzschicht ausgebildet ist; auch als Wärmestausegment bezeichnet) gebildet wird, welches an wenigstens einer radial außerhalb respektive radial innerhalb angeordneten Brennkammerstruktur befestigt ist, und wobei der Strömungspfad der Heißgase im Bereich der Leitschaufelreihe radial aussenseitig respektive radial innenseitig durch eine äußere respektive innere Schaufelplattform begrenzt ist, welche wenigstens mittelbar an wenigstens einem Turbinenträger befestigt ist. Mit anderen Worten geht es insbesondere bei einer Ringbrennkammer um die Verbesserung der Konstruktion entweder auf der Nabenseite (radial innenseitige Wandbegrenzung der Brennkammer) oder auf der Außenseite (radial aussenseitige Wandbegrenzung der Brennkammer), oder beides.

Im Gegensatz zu Lösungen, welche einfach darauf abzielen, das Spaltmaß zu reduzieren, den Eintritt von Heissgas in den Spalt zu reduzieren, oder den Spalt gewissermassen abzudecken, geht die vorliegende Erfindung den Weg, den Spalt grundsätzlich gewissermassen an einen weniger kritischen Ort zu verschieben. Der kritischste Ort ist, wie oben erläutert, an dem er herkömmlich angeordnet ist, am stromaufwärtigen Ende der Schaufelplattform, wobei diese zur Minimierung von Spannungen typischerweise möglichst kurz ausgeführt wird. Gerade an diesem Ende der Plattform ist der Einfluss der Anströmkante der ersten Leitschaufelreihe auf die Strömung und Druckverteilung gross, weshalb die oben genannten Probleme genau im Spaltbereich vorliegen.

Entsprechend der vorliegenden Erfindung wird so vorgegangen, dass wenigstens mittelbar am Turbinenträger befestigt stromauf der ersten Leitschaufelreihe und im wesentlichen angrenzend an die Schaufelplattform eine Mehrzahl von plattenförmigen Hitzeschilden angeordnet ist. Sie liegen also in Strömungsrichtung zwischen dem Hitzeschild der Brennkammer (auch Brennkammerhitzeschild genannt) und der Schaufelplattform. Diese Minihitzeschilde überbrücken diesen Bereich über eine gewisse axiale Strecke, wobei sie so geformt sind, dass sie eine der Strömung zwischen Hitzeschild und Plattform angepasste Strömungswandung bilden. Der oben erwähnte und für die Kompensation der Wärmeausdehnungsunterschiede erforderliche Spalt zwischen der Brennkammer und der Turbine wird damit gewissermassen stromaufwärts verschoben und von der kritischen Stelle unmittelbar bei der Anströmkante der ersten Leitschaufelreihe entfernt oder zumindest weg verschoben. Konkret wird dieser Spalt in einen weiter stromaufwärts gelegenen Bereich zwischen diesem Minihitzeschild und dem Hitzeschild in Form eines vorgelagerten Spaltes verschoben.

Eine erste Ausführungsform dieser Ausgestaltung einer Gasturbine gemäss der Erfindung ist dadurch gekennzeichnet, dass die Minihitzeschilde an einer sich bezüglich Strömungsrichtung der Heißgase stromaufwärtig erstreckenden Erweiterung des Turbinenträgers befestigt sind. Bei dieser Ausführungsform wird also gewissermaßen der Turbinenträger im Vergleich zur üblichen Bauweise etwas in axialer Richtung stromaufwärts verlängert, um an dieser Verlängerung die Minihitzeschilde befestigen zu können. Da diese Verlängerung damit gewissermassen Bestandteil der Turbine ist, und auch den entsprechenden Wärmeausdehnungsbedingungen ausgesetzt ist, kann dann das Spaltmaß zwischen dem daran befestigten Minihitzeschild und der angrenzenden Schaufelplattform äußerst gering eingestellt werden.

Aus Montagegründen kann es vorteilhaft sein, den Turbinenträger nicht gegenüber dem ursprünglichen Mass stromaufwärts zu verlängern, sondern ein Zusatzelement an dem eigentlichen Träger zu befestigen. Entsprechend wird gemäß einer weiteren Ausführungsform gemäss der Erfindung so vorgegangen, dass die Minihitzeschilde an wenigstens einem stromaufwärtig des Turbinenträgers angeordneten und an diesem befestigten zusätzlichen Turbinenträgerelement befestigt sind. Bei diesem Ausführungsbeispiel muss entsprechend der Turbinenträger nicht modifiziert werden, sondern die Befestigung wird über ein separates zusätzliches Turbinenträgerelement, welches am Turbinenträger stromaufwärts befestigt ist, gewährleistet. Mit anderen Worten ist in diesem Fall der Minihitzeschild nicht unmittelbar sondern mittelbar am Turbinenträger befestigt.

Zwischen diesen Hitzeschilden sind dann typischerweise im wesentlichen axial verlaufende Spalte vorhanden. Diese gewissermassen die um den Umfang benachbart angeordneten Hitzeschilde voneinander trennenden Spalte müssen dabei nicht zwingend axial verlaufen, sondern können auch ganz gezielt der Strömungsrichtung der Heißgase in diesem Bereich angepasst sein. So können diese Spalte beispielsweise genau parallel zur in diesem Bereich häufig spiralförmigen Strömungsrichtung der Heißgase in diesem Bereich angeordnet sein, sie können aber auch senkrecht dazu angeordnet sein oder unter einem bestimmten bevorzugten Winkel. Generell können dabei Mittel vorgesehen werden, diese Spalte mit einem Kühlluftstrom zu beaufschlagen, und/oder es können in diesen Spalten Dichtungen vorgesehen werden. Auch können derartige Spalte gewissermassen vermieden werden, indem die einzelnen Hitzeschilde beispielsweise in Form einer Nut/Kammverbindung ineinandergreifen oder ähnliches, wie es aus der US2009/0293488 bekannt ist.

Eine weitere bevorzugte Ausführungsform ist dadurch gekennzeichnet, dass Kontur des durch die Minihitzeschilde gebildeten Ringraums nicht über seine ganze axiale Erstreckung kreisförmig ist, sondern ausgehend von der Kreisform lokal leichte Ausbeulungen normal zur Richtung des Heissgasstroms vorgesehen sind, um lokal den statischen Druck zu erhöhen oder zu reduzieren und damit insgesamt die Uniformität der statischen Druckverteilung in Umfangsrichtung im Bereich des Spaltes zu verbessern. Derartige Ausbeulungen (bumps) sind für Plattformen von statischen Turbinenschaufeln aus der Anmeldung mit Anmeldenummer EP 09159355.8 bekannt.

Eine weitere bevorzugte Ausführungsform ist dadurch gekennzeichnet, dass zwischen der Schaufelplattform und dem wenigstens einen Minihitzeschild ein im wesentlichen umlaufender Spalt mit geringer Spaltweite vorhanden ist, das heißt welcher bevorzugtermassen eine Spaltweite in axialer Richtung im Bereich von 0.1-20 mm aufweisst. Für kleine Industriegasturbinen und Aeroderivatives beträgt die Spaltweite typischerweise 0.1 bis 5 mm, für grosse Gasturbinen beträgt sie 0.5 bis 20 mm Als grosse Gasturbine wird typischerweise eine Gasturbine mit einer Leistung ab 50 MW angesehen. Auch hier können bevorzugtermassen Mittel vorgesehen werden, diesen umlaufenden Spalt mit einem Kühlluftstrom zu beaufschlagen, und/oder es können Dichtungen, beispielsweise Labyrinthdichtungen oder sogar ein Ineinandergreifen mit der Schaufelplattform vorgesehen werden.

Um eine genügende Entfernung von der kritischen Anströmkantc der ersten Leitschaufelreihe sicherzustellen, wird bevorzugtermassen so vorgegangen, dass der Minihitzeschild in axialer Richtung eine Länge im Bereich von 5 bis 500 mm aufweisst. Für kleine Industriegasturbinen und Aeroderivatives beträgt die Länge typischerweise 5 bis 50 mm, für grosse Gasturbinen beträgt sie 10 bis 350 mm, Für zukünftige sehr grosse Gasturbinen sind Längen bis zu 500 mm denkbar. Mit anderen Worten wird ungefähr um diese Distanz die bei der Konstruktion nach dem Stand der Technik sehr breite Spalte stromaufwärts verschoben.

Der kritische Spalt nach dem Stand der Technik liegt typischerweise in einem Bereich, bei welchem die Wandung für die Strömungsgase im wesentlichen zylindrisch angeordnet ist.

Der vorgelagerte Spalt kann nun typischerweise an einer Stelle angeordnet werden, bei welcher die Wandung der Brennkammer weiter stromaufwärts in Strömungsrichtung betrachtet konisch zulaufend angeordnet ist, und er verfügt dabei vorzugsweise über ein Spaltmaß in radialer Richtung im Bereich von etwa 0.1-20 mm. Für kleine Industriegasturbinen und sogenannte Aeroderivatives (Flugtriebwerk das für industrielle Zwecke übernommen und geändert wurde) beträgt die Spaltweite typischerweise 0.1 bis 5 mm, für grosse Gasturbinen beträgt sie 0.5 bis 15 mm und kann für sehr grosse Gasturbinen 20 mm oder mehr betragen.

Eine weitere bevorzugte Ausführungsform zeichnet sich dadurch aus, dass Mittel vorgesehen sind, den vorgelagerten Spalt, und insbesondere eine dahinter angeordnete Kavität, mit Kühlluft zu beaufschlagen. Dabei kann zudem im Eintrittsbereich einer derartigen Kavität wenigstens ein Stufenelement angeordnet werden, welches die Breite der Kavität in wenigstens einer, im wesentlichen senkrecht zur Strömungsrichtung des Heissgases in der Kavität verlaufenden Stufe um wenigstens 10 % reduziert, wobei bevorzugtermassen ein solches Stufenelement bezüglich Achse der Turbine umlaufend ausgebildet ist.

Es ist möglich, die gesamte Konstruktion so auszulegen, dass pro Brenner in der Brennkammer ein Minihitzeschild angeordnet ist, es ist auch möglich, pro Brenner beispielsweise zwei oder drei Hitzeschilde anzuordnen, oder jeweils für zwei Brenner oder drei Brenner einen gemeinsamen Hitzeschild. Typischerweise wird die Anzahl der Brennkammerhitzeschilde als ein ganzzahliges Vielfaches der Anzahl Minihitzeschilde gewählt oder die Anzahl Minihitzeschilde als ein ganzzahliges Vielfaches der Anzahl der Brennkammerhitzeschilde gewählt. Beispielsweise sind bei einer Gasturbine des Typs GT 24 mit sequenzieller Verbrennung um den Umfang der Ringbrennkammer verteilt 24 Brenner angeordnet, es kann also bei einer derartigen Bauweise um den Umfang verteilt 24 Minihitzeschilde haben, das heißt pro Brenner einen Hitzeschild, oder aber auch 12, so dass jeweils zwei Brenner einen Hitzeschild gewissermassen teilen, oder aber 48, wenn jeweils pro Brenner zwei Minihitzeschilde vorgesehen werden.

Typischerweise gibt es wesentlich mehr Leitschaufeln bei der ersten Leitschaufelreihe der Turbine als es Brenner gibt. Es ist auch eine Anpassung der Anzahl der Hitzeschilde an die Gegebenheiten der ersten Leitschaufelreihe ist möglich. Entsprechend ist es möglich, dass pro Leitschaufel der ersten Leitschaufelreihe in der Brennkammer jeweils ein Minihitzeschild angeordnet ist. Ebenfalls möglich ist es, dass jeweils zwei Leitschaufeln einen gemeinsamen Hitzeschild stromaufwärts aufweisen.

Typischerweise wird die Anzahl der Leitschaufeln der ersten Leitschaufelreihe als ein ganzzahliges Vielfaches der Anzahl Minihitzeschilde gewählt oder die Anzahl Minihitzeschilde als ein ganzzahliges Vielfaches der Anzahl der Leitschaufeln der ersten Leitschaufelreihe gewählt.

Diese Hitzeschilde können sei es nun wenn deren Anzahl auf die Brenner oder auf die Leitschaufeln bezogen vorgesehen wird, entweder genau gestaffelt angeordnet werden oder werden bevorzugtermassen so angeordnet, dass die zwischen den Hitzeschilden vorhandenen Spalte gestaffelt zwischen jeweils zwei benachbarten Brennern respektive zwischen zwei benachbarten Leitschaufeln angeordnet sind, da dann diese zwischen den Hitzeschilden vorhandenen Spalte am wenigsten belastet werden

Die Minihitzeschilde sind typischerweise als individuelle, an die Strömungsform angepasste im wesentlichen plattenförmige Wärmestauelemente ausgebildet, welche über formschlüssige und/oder kraftschlüssige und/oder stoffschlüssige Mittel an einer stromaufwärtigen Erweiterung des Turbinenträgers oder an einem am Turbinenträger befestigten zusätzlichen Turbinenträgerelement befestigt sind.

Die Hitzeschilde verfügen üblicherweise wenigstens auf der den in der Brennkammer strömenden Heissgasen zugewandten Seite über eine Wärmedämmschicht, die beispielsweise eine keramische Schicht ist

Der vorgelagerte Spalt geht typischerweise auf der der Brennkammer abgewandten Rückseite in eine Kavität über, und diese Kavität kann sich dann zum Beispiel in im wesentlichen axialer Richtung erstrecken, so beispielsweise in Form eines um die Achse der Gasturbine im wesentlichen umlaufenden, einen Zylindermantel bildenden Spaltes.

Alternativ ist es möglich, dass der vorgelagerte Spalt auf der der Brennkammer abgewandten Rückseite in eine Kavität übergeht, und dass sich diese Kavität im wesentlichen in radialer Richtung erstreckt, so also beispielsweise in Form eines um die Achse der Gasturbine im wesentlichen umlaufenden, gewissermassen eine Kreisscheibe bildenden Spaltes.

Es ist aber auch möglich, dass der Spalt eine Verlaufsrichtung zwischen diesen beiden Richtungen (axial/radial) aufweist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen schematischen axialen Schnitt durch den radial äußeren Strömungsbereich beim Austritt der Brennkammer, das heißt beim Übergangsbereich von der Brennkammer zur ersten Leitschaufelreihe, bei einer Konstruktion nach dem Stand der Technik;
- Fig. 2: einen schematischen axialen Schnitt durch den radial äußeren Strömungsbereich beim Austritt der Brennkammer bei einer Bauweise nach einem ersten Ausführungsbeispiel nach der Erfindung;
- Fig. 3: einen schematischen axialen Schnitt durch den radial äußeren Strömungsbereich beim Austritt der Brennkammer bei einer Bauweise nach einem zweiten Ausführungsbeispiel nach der Erfindung; und
- Fig. 4: einen schematischen axialen Schnitt durch den radial äußeren Strömungsbereich beim Austritt der Brennkammer bei einer Bauweise nach einem dritten Ausführungsbeispiel nach der Erfindung.

### BESCHREIBUNG BEVORZUGTER AUSFÜHRUNGSFORMEN

In der Folge soll anhand der Figuren erläutert werden, wie der Übergangsbereich zwischen der Brennkammer und der ersten Leitschaufelreihe vorzugsweise ausgestaltet werden kann. Im Zusammenhang mit den nun diskutierten Figuren wird jeweils nur die Situation auf der radialen Aussenseite vorgestellt, die hier gemachten Überlegungen finden aber ganz analog auch für die radiale Innenseite Anwendung, d.h. für die nabenseitige Wandbegrenzung beim Übergang der Brennkammer zur ersten Leitschaufelreihe.

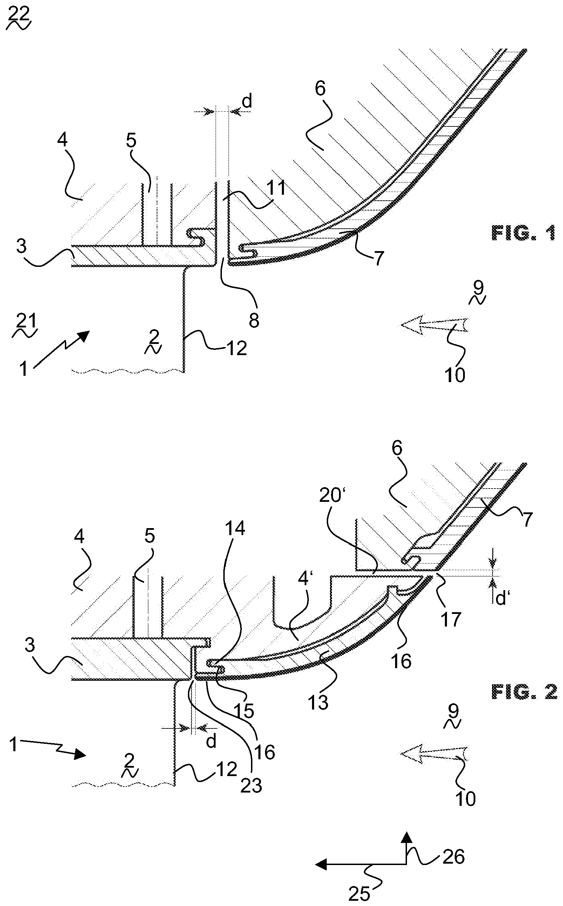

Figur 1 zeigt zunächst den Übergangsbereich der Wandung von der Brennkammer 9 zur ersten Leitschaufelreihe 1 der Turbine 21 bei einer Bauweise nach dem Stand der Technik. Die erste Leitschaufelreihe 1 wird gebildet durch typischerweise jeweils einzelne Schaufelblätter 2, welche radial aussenseitig und radial innenseitig über Schaufelplattformen 3 verfügen. Über diese Schaufelplattformen, welche ihrerseits einen gewissermassen umlaufenden geschlossenen Ring bilden, der den Strömungsquerschnitt radial nach aussen begrenzt, ist die Leitschaufelreihe 1 an einem Turbinenträger 4 befestigt. Da hier hohe Temperaturen vorherrschen, gibt es eine entsprechende Kühlluftzufuhr 5, die gegebenenfalls in entsprechende Kühlluftkanäle in den Plattformen 3 und/oder den Schaufelblättern 2 einmünden.

Stromaufwärts dieser ersten Leitschaufelreihe 1 befindet sich die Brennkammer 9 und diese wird typischerweise über ein oder mehrere Hitzeschilder 7, die an einer Brennkammerstruktur 6 befestigt sind, begrenzt. Diese Hitzeschilder 7 sind typischerweise plattenförmig ausgebildet und verfügen auf der den Heissgasen ausgesetzten Seite über thermische Schutzschichten.

Die Heissgase strömen, wie dies schematisch durch den Pfeil 10 angedeutet wird, in im wesentlichen axialer Richtung stromabwärts der Brenner, welche in Figur 1 nicht dargestellt sind und gewissermassen auf der rechten Seite des dargestellten Bereiches liegen. Diese Heissgase treffen unter anderem auf die Anströmkante 12 der Schaufelblätter 2. Gerade in diesem Bereich ist nun aber der Übergang zwischen dem Hitzeschild 7 und der Plattform 3, in diesem Übergangsbereich ist ein umlaufender Spalt 8 angeordnet, welcher dahinter in eine Kavität 11 mündet, die sich tief in die Tragkonstruktion des Turbinenträges 4 respektive der Brennkammerstruktur 6 erstreckt. Dieser Spalt ist wegen der eingangs genannten Effekte erforderlich und liegt typischerweise mit einem Spaltmass d im Bereich von 10 bis 50 mm. Wird der Spalt schmaler gewählt, so können unterschiedliche Wärmeausdehnungen der Komponenten Brennkammer / Turbine sowie andere Effekte nicht mehr genügend kompensiert werden. Entsprechend ist auch im Bereich dieses Spaltes ein hoher Aufwand der Kühlung respektive der Spülung der Kühlluft zudem auch noch mit hohem Druck erforderlich, da die in der Kavität 11 liegenden Bauteile vor den heissen Strömungsgasen geschützt werden müssen, und da aber gleichzeitig genau an dieser Stelle hohe Druckschwankungen und insbesondere hohe Druckspitzen vorliegen.

Figur 2 zeigt nun ein erstes Ausführungsbeispiel der Erfindung. Zwischen Hitzeschild 7 und erster Schaufelplattform 3 der ersten Leitschaufelreihe 1 wird nun ein Zwischenelement in Form eines Minihitzeschildes 13 zwischengeschaltet. Dieser Hitzeschild 13 wird dabei direkt an einer stromaufwärtigen Erweiterung 4' des Turbinenträgers 4 befestigt. Es handelt sich gewissermassen um Mini-Hitzeschilde, welche um den Umlauf der Ringbrennkammer verteilt angeordnet sind. Diese Hitzeschilde 13 können dabei, wie dies in dieser Figur dargestellt ist, auf der Seite der Leitschaufelreihe 1 über eine Verbindung mit Befestigungsvorsprung 14 und Haltenase 15 und darüber angeordnetem Deckbereich 16 realisiert sein, es sind aber auch andere Befestigungsmöglichkeiten realisierbar. Infolge der Tatsache, dass dieser zusätzliche Hitzeschild direkt am gleichen Tragelement, konkret am Turbinenträger 4, befestigt ist, und entsprechend sowohl hinsichtlich Vibrationen als auch hinsichtlich Wärmeausdehnung etc. den im Wesentlichen gleichen Bedingungen ausgesetzt ist, wie die Schaufelplattform 3, ist es nun möglich, das entsprechende Spaltmass d des verbleibenden Spaltes 23 zwischen Schaufelplattform 3 und Hitzeschild 13 äusserst gering auszugestalten, so sind hier beispielsweise Spaltmasse in axialer Richtung von 0.5 - 3 mm möglich, ohne dass dadurch Probleme auftreten.

Der Spalt 17 zwischen den Hitzeschild 7 und dem Hitzeschild 13 ist nun wesentlich weiter stromaufwärts verschoben, namentlich ist der vorgelagerte Spalt 17 jetzt auch noch an der erweiterten Wandungszone der Brennkammer 9 angeordnet. Zudem verläuft die hinter diesem vorgelagerten Spalt 17 angeordnete Kavität 20 nicht mehr wie nach dem Stand der Technik in radialer Richtung sondern als axiale Kavität 20' in axialer Richtung 25, was weitere Vorteile haben kann, insbesondere dass dieser Spalt mit einem Spaltmass d' realisiert werden kann, welches wesentlich geringer ist, als das Spaltmass, wenn der entsprechende Spalt gewissermassen in radialer Richtung verläuft, wie dies z.B. in Fig. 1 dargestellt ist.

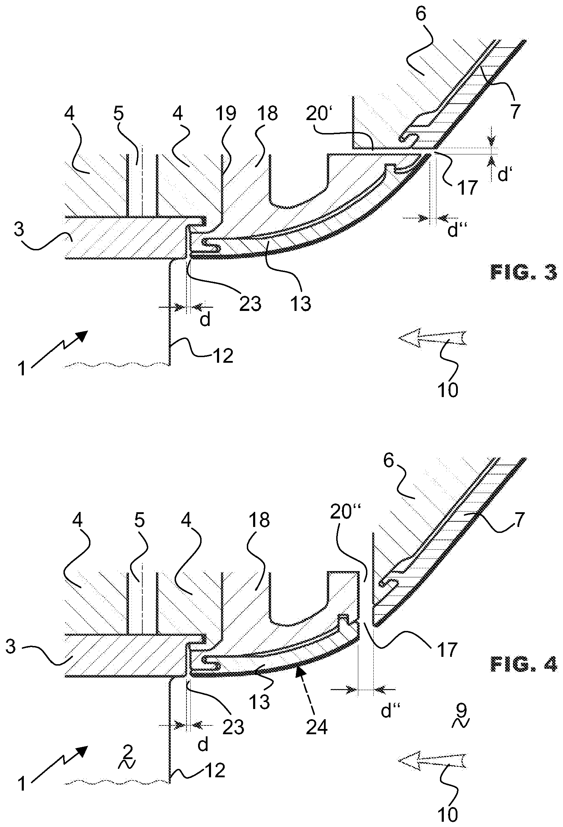

Ein zweites Ausführungsbeispiel ist in Figur 3 dargestellt. Ein wesentlicher Unterschied zur Bauweise gemäss Figur 2 (in der Gesamtheit der Figuren werden jeweils gleiche oder funktionsäquivalente Bauteile durch die gleichen Bezugszeichen bezeichnet) besteht darin, dass der Turbinenträger 4 keine stromaufwärtige Erweiterung 4' aufweist, sondern dass anstelle dessen ein zusätzliches sich stromaufwärts erstreckendes Turbinenträgerelement 18 aufweist. Dieses separate Turbinenträgerelement 18 ist am Turbinenträger 4 befestigt, dies kann über einen Formschluss und/oder einen Kraftschluss und/oder einen Stoffschluss erfolgen beispielsweise an der Vorderseite 19 des Turbinenträgers. Grundsätzlich übernimmt dieses zusätzliche Turbinenträgerelement 18 die gleiche Funktion, wie die stromaufwärtige Erweiterung des Turbinenträgers. Aus Montagegründen kann es aber vorteilhaft sein, den Turbinenträger nicht gegenüber dem ursprünglichen Mass zu verlängern in stromaufwärtiger Richtung, sondern ein Zusatzelement, hier eben das zusätzliche Turbinenträgerelement 18, an dem eigentlichen Turbinenträger 4 zu befestigen. Ein drittes Ausführungsbeispiel ist in Figur 4 dargestellt. Hier wird der zusätzliche Minihitzeschild 13 ebenfalls mittelbar über ein zusätzliches Turbinenträgerelement 18 am Turbinenträger 4 befestigt. Grundsätzlich kann übrigens, dies sowohl im Zusammenhang mit der Konstruktion nach Figur 3 als auch mit Figur 4, das zusätzliche Turbinenträgerelement 18 in Form eines umlaufenden Ringes ausgestaltet sein, es kann sich aber auch um Segmente handeln, welche dabei nicht einmal aneinander grenzend umlaufend vorhanden sein müssen, sondern welche auch beispielsweise beabstandet um den Umlauf der Ringbrennkammer verteilt angeordnet sein können. Im Gegensatz zum Ausführungsbeispiel nach Figur 3 ist bei jenem nach Figur 4 der vorgelagerte Spalt 17 etwas weniger weit vorgelagert und zudem verläuft der Spalt 17 respektive die dahinter liegende Kavität 20 hier nicht in axialer Richtung, sondern al radiale Kavität 20" in radialer Richtung.

Die einzelnen Minihitzeschilde sind dabei in Form gewissermassen von Segmenten um den Unfang der Ringbrennkammer herum verteilt. Die Anzahl derartiger Hitzeschilde kann dabei, wie oben erläutert, entweder in Abhängigkeit der Anzahl der Brenner, der Anzahl der Brennkammerhitzeschilde oder in Abhängigkeit der Anzahl der Leitschaufeln 2 gewählt werden. Zwischen den einzelnen Hitzeschilden respektive den Segmenten von solchen Hitzeschilden verbleiben i.d.R. axial verlaufende Spalte 24, welche in Figur 4 schematisch durch einen gestrichelten Pfeil angedeutet sind. Diese axial verlaufenden Spalte 24 werden vorzugsweise, genau wie gegebenenfalls auch die Spalte 17 und 23, mit Kühlluft beaufschlagt, oder mit Dichtungen, beispielsweise Labyrinthdichtungen, versehen, um dahinterliegende Bauteile zu schützen. Infolge der geringeren Spaltmasse werden dabei generell niedrigere Drücke für die Spülluft benötigt und es wird generell weniger Spülluft respektive Kühlluft benötigt. Zudem kann aufgrund der segmentartigen Ausbildung der einzelnen Minihitzeschilde auch auf eine lokale Behandlung der Druckspitzen zurückgegriffen werden. Generell wird durch die Bauweise ermöglicht, kompaktere Turbinen zu bauen.

**BEZUGSZEICHENLISTE**

| | | | |
|---|---|---|---|
| 1 | erste Leitschaufelreihe | 16 | Deckbereich |
| 2 | erste Leitschaufelreihe, Schaufelblatt | 17 | Spalt an der vorgelagerten Stelle |
| 3 | erste Leitschaufelreihe, Schaufelplattform | 18 | zusätzliches Turbinenträgerelement |
| 4 | Turbinenträger (oder Turbinenleitschaufelträger) | 19 | Vorderseite von 4 |
| | | 20 | Kavität hinter 17 |
| 4' | stromaufwärtige Erweiterung des Turbinenträgers | 20' | axiale Kavität |
| | | 20" | radiale Kavität |
| 5 | Kühlluftzufuhr | 21 | Turbine |
| 6 | Brennkammerstruktur (Aufhängung am Brennkammergehäuse | 22 | Gasturbine |
| | | 23 | Spalt zwischen 3 und 13 |
| | | 24 | axial verlaufender Spalt zwischen über den Umfang verteilt benachbarten Hitzeschilden |
| 7 | Brennkammerhitzeschild, (Hitzeschild der Brennkammer) | | |
| 8 | Spalt an der Schaufelplattform | 25 | axiale Richtung |
| | | 26 | radiale Richtung |
| 9 | Brennkammer | | |
| 10 | Strömungsrichtung der Heißgase | d | Spaltmaß bei Schaufelplattform |
| 11 | Kavität hinter 8 | d' | Spaltmaß bei der vorgelagerten Spalte 17 in radialer Richtung |
| 12 | Anströmkante | | |
| 13 | Minihitzeschild, separates Hitzeschild | | |
| | | d" | Spaltmaß bei der vorgelagerten Spalte 17 in axialer Richtung |
| 14 | Befestigungsvorsprung | | |
| 15 | Haltenase | | |

## Patentansprüche

1. Gasturbine (22) mit mindestens einer Brennkammer (9) und einer im wesentlichen unmittelbar stromab davon angeordneten ersten Leitschaufelreihe (2) einer Turbine (21), wobei die radial aussenseitige und/oder radial innenseitige Begrenzung der Brennkammer (9) durch wenigstens ein äußeres respektive inneres Hitzeschild (7) gebildet wird, welches an wenigstens einer radial außerhalb respektive radial innerhalb angeordneten Brennkammerstruktur (6) befestigt ist, und wobei der Strömungspfad der Heißgase (10) im Bereich der Leitschaufelreihe (2) radial aussenseitig respektive radial innenseitig durch eine äußere respektive innere Schaufelplattform (3) begrenzt ist, welche wenigstens mittelbar an wenigstens einem Turbinenträger (4) befestigt ist,
**dadurch gekennzeichnet, dass**
an einer sich stromaufwärtig erstreckenden Erweiterung (4') des Turbinenträgers (4) oder an einem stromaufwärtig des Turbinenträgers (4) angeordneten und an diesem befestigten Turbinenträgerelement (18) befestigt, stromauf der ersten Leitschaufelreihe (2) und im wesentlichen angrenzend an die Schaufelplattform (3) sowie in Strömungsrichtung (10) zwischen dem Hitzeschild (7) und der Schaufelplattform (3) und zwischen diesen in Form eines der Strömung angepassten Verlaufs die Strömungswandung bildend, eine Mehrzahl von plattenförmigen Minihitzeschilden (13) angeordnet ist, wobei zwischen den Minihitzeschilden (13) und den Hitzeschilden (7) ein vorgelagerter Spalt (17) vorhanden ist.

2. Gasturbine (22) nach Anspruch 1, **dadurch gekennzeichnet, dass** um den Umlauf der Wandung der Brennkammer (9) eine Mehrzahl von Minihitzeschilden (13) angeordnet ist, zwischen welchen bevorzugtermassen im wesentlichen axial verlaufende Spalte (24) vorhanden sind oder im wesentlichen in der Hauptströmungsrichtung (10) verlaufende Spalte vorhanden sind, wobei bevorzugtermassen Mittel vorgesehen sind, um diese Spalte mit einem Kühlluftstrom zu beaufschlagen, und/oder in diesen Spalten (24) Dichtungen vorgesehen sind.

3. Gasturbine (22) nach einem der vorhergehenden Ansprüche, **dadurch gekennzeichnet, dass** zwischen der Schaufelplattform (3) und den Minihitzeschilden (13) ein im wesentlichen umlaufender Spalt (23) vorhanden ist, welcher bevorzugtermassen eine Spaltweite (d) in axialer Richtung im Bereich von 1-5 mm, vorzugsweise im Bereich von 2-4 mm aufweist, wobei weiterhin bevorzugtermassen Mittel vorgesehen sind, diesen umlaufenden Spalt (23) mit einem Kühlluftstrom beaufschlagen.

4. Gasturbine (22) nach einem der vorhergehenden Ansprüche, **dadurch gekennzeichnet, dass** der Minihitzeschild (13) in axialer Richtung (25) eine Länge im Bereich von 5 - 500 mm, bevorzugtermassen im Bereich von 10-350 mm aufweist.

5. Gasturbine (22) nach einem der vorhergehenden Ansprüche, **dadurch gekennzeichnet, dass** der vorgelagerte Spalt (17) an einer Stelle angeordnet ist, bei welcher die Wandung der Brennkammer konisch zulaufend angeordnet ist, und wobei vorzugsweise dessen Spaltmaß (d') in radialer Richtung (26) im Bereich von 0.1-20 mm, vorzugsweise im Bereich von 0.5-20 mm liegt, und/oder wobei vorzugsweise dessen Spaltmaß (d") in axialer Richtung (25) im Bereich von 0.1-20 mm, vorzugsweise im Bereich von 0.5-20 mm liegt.

6. Gasturbine (22) nach einem der vorhergehenden Ansprüche, **dadurch gekennzeichnet, dass** Mittel vorgesehen sind, den vorgelagerten Spalt (17), und insbesondere eine dahinter angeordnete Kavität (20) mit Kühlluft zu beaufschlagen, wobei vorzugsweise im Eintrittsbereich einer derartigen Kavität wenigstens ein Stufenelement angeordnet ist, welches die Breite der Kavität in wenigstens einer, im wesentlichen senkrecht zur Strömungsrichtung des Heissgases in der Kavität (20) verlaufenden Stufe um wenigstens 10 % reduziert, wobei bevorzugtermassen ein solches Stufenelement bezüglich Achse der Turbine umlaufend ausgebildet ist.

7. Gasturbine (22) nach einem der vorhergehenden Ansprüche, **dadurch gekennzeichnet, dass** die Anzahl der Brennkammerhitzeschilde (7) ein ganzzahliges Vielfaches der Anzahl Minihitzeschilde (13) ist oder die Anzahl Minihitzeschilde (13) ein ganzzahliges Vielfaches der Anzahl Brennkammerhitzeschilde (7) ist.

8. Gasturbine (22) nach einem der vorhergehenden Ansprüche, **dadurch gekennzeichnet, dass** die Anzahl der Minihitzeschilde (13) ein ganzzahliges Vielfaches der Anzahl der Leitschaufeln (2) der ersten Leitschaufelreihe (13) ist oder die Anzahl der Leitschaufeln (2) der ersten Leitschaufelreihe ein ganzzahliges Vielfaches der Anzahl der Minihitzeschilde (13).

9. Gasturbine (22) nach einem der vorhergehenden Ansprüche, **dadurch gekennzeichnet, dass** die Minihitzeschilde (13) als individuelle, an die Strömungsform angepasstc Wärmestauelemente ausgebildet sind, welche über formschlüssige und/oder kraftschlüssige und/oder stoffschlüssige Mittel (14,15) an der Erweiterung (4') des Turbinenträgers oder an dem am Turbinenträger (4) befestigten zusätzlichen Turbinenträgerelement (18) befestigt sind.

10. Gasturbine (22) nach Anspruch 11, **dadurch gekennzeichnet, dass** die Hitzeschilde (13) wenigstens auf der den in der Brennkammer strömenden Heissgasen zugewandten Seite über eine thermische Barriereschicht verfügen.

11. Gasturbine (22) nach einem der vorhergehenden Ansprüche, **dadurch gekennzeichnet, dass** der vorgelagerte Spalt (17) auf der der Brennkammer (9) abgewandten Rückseite in eine Kavität (20) übergeht, und dass sich diese Kavität (20) im wesentlichen in axialer Richtung (25) erstreckt, vorzugsweise in Form eines um die Achse der Gasturbine (22) im wesentlichen umlaufenden, einen Zylindermantel bildenden Spaltes (20').

12. Gasturbine nach einem vorhergehenden Ansprüche, **dadurch gekennzeichnet, dass** die Kontur des durch die Minihitzeschilde (13) gebildeten Ringraums nicht über seine ganze axiale Erstreckung kreisförmig ist, sondern ausgehend von der Kreisform lokal leichte Ausbeulungen normal zur Richtung des Heissgasstroms (10) vorgesehen sind, um lokal den statischen Druck zu erhöhen oder zu Reduzieren und damit insgesamt die Uniformität der statischen Druckverteilung in Umfangsrichtung im Bereich des vorgelagerten Spaltes (17) zu verbessern.

13. Gasturbine nach einem vorhergehenden Ansprüche, **dadurch gekennzeichnet, dass** der vorgelagerte Spalt (17) auf der der Brennkammer (9) abgewandten Rückseite in eine Kavität (20) übergeht, und dass sich diese Kavität (20) im wesentlichen in radialer Richtung (26) erstreckt, vorzugsweise in Form eines um die Achse der Gasturbine (22) im wesentlichen umlaufenden, eine Kreisscheibe bildenden Spaltes (20").

## Claims

1. Gas turbine (22) with at least one combustion chamber (9) and a first guide vane row (2) of a turbine (21) arranged substantially immediately downstream thereof, wherein the radially outer and/or radially inner delimitation of the combustion chamber (9) is formed by at least one outer or inner heat shield (7) respectively which is attached to at least one combustion chamber structure (6) arranged radially outside or radially inside respectively, and wherein the flow path of the hot gases (10) in the region of the guide vane row (2) is delimited radially outwardly and/or radially inwardly by an outer or inner vane platform (3) respectively which is attached at least indirectly to at least one turbine carrier (4),
**characterised in that** a plurality of platform-like mini heat shields (13) is arranged on a widening (4') of the turbine carrier (4) extending upstream, or on a turbine carrier element (18) arranged upstream of the turbine carrier (4) and attached thereto, upstream of the first guide vane row (2) and substantially adjacent to the vane platform (3) and in the flow direction (10) between the heat shield (7) and the vane platform (3), and between these, forming the flow wall, in the form of a course adapted to the flow,
wherein an upstream gap (17) is present between the mini heat shields (13) and the heat shields (7).

2. Gas turbine (22) according to claim 1, **characterised in that** a plurality of mini heat shields (13) is arranged around the periphery of the wall of the combustion chamber (9), between which preferably substantially axial gaps (24) or gaps running substantially in the main flow direction (10) are present, wherein preferably means are provided for applying a cooling air flow to these gaps, and/or seals are provided in these gaps (24).

3. Gas turbine (22) according to any of the preceding claims, **characterised in that** a substantially circumferential gap (23) is present between the vane platform (3) and the mini heat shields (13), which gap preferably has a gap width (d) in the axial direction in the range from 1 - 5 mm, preferably in the range from 2 - 4 mm, wherein furthermore preferably means are provided which apply a cooling air flow to this circumferential gap (23).

4. Gas turbine (22) according to any of the preceding claims, **characterised in that** the mini heat shield (13) has a length in the axial direction (25) in the range from 5 - 500 mm, preferably in the range from 10 - 350 mm.

5. Gas turbine (22) according to any of the preceding claims, **characterised in that** the upstream gap (17) is arranged at a point at which the wall of the combustion chamber is arranged conically tapering, and wherein preferably the gap dimension (d') in the radial direction (26) preferably lies in the range from 0.1 - 20 mm, preferably in the range from 0.5 - 20 mm, and/or wherein preferably the gap dimension (d") in the axial direction (25) preferably lies in the range from 0.1 - 20 mm, preferably in the range from 0.5 - 20 mm.

6. Gas turbine (22) according to any of the preceding claims, **characterised in that** means are provided for applying cooling air to the upstream gap (17) and in particular to a cavity (20) arranged behind this, wherein preferably in the inlet area of such a cavity at least one step element is arranged which reduces the width of the cavity by at least 10% in at least one step running substantially perpendicular to the flow direction of the hot gas in the cavity (20), wherein preferably such a step element is configured circumferentially relative to the axis of the turbine.

7. Gas turbine (22) according to any of the preceding claims, **characterised in that** the number of combustion chamber heat shields (7) is an integral multiple of the number of mini heat shields (13), or the number of mini heat shields (13) is an integral multiple of the number of combustion chamber heat shields (7).

8. Gas turbine (22) according to any of the preceding claims, **characterised in that** the number of mini heat shields (13) is an integral multiple of the number of guide vanes (2) of the first guide vane row (13¹), or the number of guide vanes (2) of the first guide vane row is an integral multiple of the number of mini heat shields (13).

9. Gas turbine (22) according to any of the preceding claims, **characterised in that** the mini heat shields (13) are configured as individual heat build-up elements adapted to the flow form, which are attached to the extension (4') of the turbine carrier and/or to the additional turbine carrier element (18) attached to the turbine carrier (4) via form-fit and/or force-fit and/or material-fit means (14, 15).

10. Gas turbine (22) according to claim 11, **characterised in that** the heat shields (13) have a thermal barrier layer at least on the side facing the hot gases flowing into the combustion chamber.

11. Gas turbine (22) according to any of the preceding claims, **characterised in that** on the back side facing away from the combustion chamber (9), the upstream gap (17) transforms into a cavity (20), and that this cavity (20) extends substantially in the axial direction (25), preferably in the form of a gap (20') running substantially around the axis of the gas turbine (22) and forming a cylinder casing.

12. Gas turbine according to any of the preceding claims, **characterised in that** the contour of the ring chamber formed by the mini heat shields (13) is not circular over its entire axial extension, but starting from the circle form has slight local bulges which are normal to the direction of the hot gas flow (10), in order to increase or reduce the static pressure locally and hence as a whole improve the uniformity of the static pressure distribution in the circumferential direction in the region of the upstream gap (17).

13. Gas turbine according to any of the preceding claims, **characterised in that** on the back side facing away from the combustion chamber (9), the upstream gap (17) transforms into a cavity (20), and that this cavity (20) extends substantially in the radial direction (26), preferably in the form of a gap (20") running substantially around the axis of the gas turbine (22) and forming a circular disc.

## Revendications

1. Turbine à gaz (22) avec au moins une chambre de combustion (9) et une série de premières aubes directrices (2) disposée globalement directement en aval de celle-ci (21), la délimitation radiale externe et/ou radiale interne de la chambre de combustion (9) étant constitué respectivement d'au moins un bouclier thermique externe ou interne (7), qui est fixé respectivement à au moins une structure de chambre de combustion (6) disposée radialement à l'extérieur ou radialement à l'intérieur et le trajet d'écoulement des gaz chauds (10) étant délimité, au niveau de la série d'aubes directrices (2), respectivement radialement vers l'extérieur ou radialement vers l'intérieur à travers une plateforme d'aube (3) respectivement externe ou interne, qui est fixé, au moins indirectement, à au moins un support de turbine (4),
**caractérisée en ce que**
fixée à une extension (4'), s'étendant vers l'amont, du support de turbine (4) ou à un élément de support de turbine (18) disposé en amont du support de turbine (4) et fixé à celui-ci, en amont de la première série d'aubes directrices (2) et globalement adjacente à la plateforme d'aube (3) ainsi que dans la direction d'écoulement (10) entre le bouclier thermique (7) et la plateforme d'aube (3) et entre ceux-ci, sous la forme d'un tracé adapté à l'écoulement, formant la paroi d'écoulement, est disposée une pluralité de mini-boucliers thermiques (13) en forme de plaques, un interstice (17) existant en amont entre les mini-boucliers thermiques (13) et les boucliers thermiques (7).

2. Turbine à gaz (22) selon la revendication 1, **caractérisée en ce que**, autour de la paroi de la chambre de combustion (9), est disposée une pluralité de mini-boucliers thermiques (13), entre lesquels sont prévus, de préférence, des interstices (24) s'étendant globalement axialement ou des interstices s'étendant globalement dans la direction de l'écoulement principal (10), de préférence des moyens étant prévus pour alimenter ces interstices avec un flux d'air de refroidissement et/ou des joints d'étanchéité étant prévus dans ces interstices (24).

3. Turbine à gaz (22) selon l'une des revendications précédentes, **caractérisée en ce que**, entre la plateforme d'aube (3) et les mini-boucliers thermiques (13) est prévu un interstice (23) globalement circulaire, qui présente de préférence une largeur d'interstice (d) dans la direction axiale de l'ordre de 1 à 5 mm, de préférence de l'ordre de 2 à 4 mm, des moyens étant en outre prévus pour alimenter cet interstice circulaire (23) avec un flux d'air de refroidissement.

4. Turbine à gaz (22) selon l'une des revendications précédentes, **caractérisée en ce que** le mini-bouclier thermique (13) présente, dans la direction axiale (25), une longueur de l'ordre de 5 à 500 mm, de préférence de l'ordre de 10 à 350 mm.

5. Turbine à gaz (22) selon l'une des revendications précédentes, **caractérisée en ce que** l'interstice amont (17) est disposé à un endroit au niveau duquel la paroi de la chambre de combustion se termine de manière conique, et de préférence sa dimension d'interstice (d') dans la direction radiale (26) étant de l'ordre de 0,1 à 20 mm, de préférence de l'ordre de 0,5 à 20 mm et/ou, de préférence, sa dimension d'interstice (d") dans la direction axiale (25) étant de l'ordre de 0,1 à 20 mm, de préférence de l'ordre de 0,5 à 20 mm.

6. Turbine à gaz (22) selon l'une des revendications précédentes, **caractérisée en ce que** des moyens sont prévus pour alimenter l'interstice amont (17) et plus particulièrement une cavité (20) disposée derrière celui-ci, en air de refroidissement, de préférence, dans la zone d'entrée d'une telle cavité, au moins un élément de gradin étant disposé, qui réduit la largeur de la cavité dans au moins un étage globalement perpendiculaire à la direction d'écoulement du gaz chaud dans la cavité (20), d'au moins 10 %, de préférence un tel élément de gradin étant conçu de manière circulaire par rapport à l'axe de la turbine.

7. Turbine à gaz (22) selon l'une des revendications précédentes, **caractérisée en ce que** le nombre de boucliers thermiques (7) de la chambre de combustion est un multiple entier du nombre de mini-boucliers thermiques (13) ou le nombre de mini-boucliers thermiques (13) est un multiple entier du nombre de boucliers thermiques (7) de la chambre de combustion.

8. Turbine à gaz (22) selon l'une des revendications précédentes, **caractérisée en ce que** le nombre de mini-boucliers thermiques (13) est un multiple entier du nombre d'aubes directrices (2) de la première série d'aubes directrices (13) ou le nombre d'aubes directrices (2) de la première série d'aubes directrices est un multiple entier du nombre de mini-boucliers thermiques (13).

9. Turbine à gaz (22) selon l'une des revendications précédentes, **caractérisée en ce que** les mini-boucliers thermiques (13) sont conçus comme des éléments d'accumulation thermique individuels adaptés à la forme de l'écoulement, qui sont fixés par des moyens à complémentarité de forme et/ou par force et/ou par liaison de matière (14, 15) à l'extension (4') du support de turbine ou à l'élément de support de turbine (18) supplémentaire fixé au support de turbine (4).

10. Turbine à gaz (22) selon la revendication 11, **caractérisée en ce que** les boucliers thermiques (13) disposent, au moins sur le côté orienté vers le gaz chauds s'écoulant dans la chambre de combustion, d'une couche protectrice thermique.

11. Turbine à gaz (22) selon l'une des revendications précédentes, **caractérisée en ce que** l'interstice amont (17) débouche, sur le côté arrière opposé à la chambre de combustion (9), dans une cavité (20) et **en ce que** cette cavité (20) s'étend globalement dans la direction axiale (25), de préférence sous la forme d'un interstice (20') formant une enveloppe cylindrique globalement autour de l'axe de la turbine à gaz (22).

12. Turbine à gaz selon l'une des revendications précédentes, **caractérisée en ce que** le contour de l'espace annulaire formé par les mini-boucliers thermiques (13) n'est pas circulaire sur toute son extension axiale, mais, de légères protubérances perpendiculaires à la direction du flux de gaz chauds (10) sont prévues localement afin d'augmenter ou de réduire localement la pression statique et donc d'améliorer l'uniformité de la répartition de la pression statique sur la circonférence au niveau de l'interstice amont (17).

13. Turbine à gaz selon l'une des revendications précédentes, **caractérisée en ce que** l'interstice amont (17) débouche, sur le côté arrière opposé à la chambre de combustion (9), dans une cavité (20) et **en ce que** cette cavité (20) s'étend globalement dans la direction radiale (26), de préférence sous la forme d'un interstice (20") constituant une rondelle circulaire entourant globalement l'axe de la turbine à gaz (22).
